# EUROPEAN PATENT APPLICATION

(11) **EP 1 916 795 A2**
(43) Date of publication of application: **30.04.2008**
(21) Application number: 07020948.1
(22) Date of filing: 25.10.2007
(51) Int. Cl.: H04L 1/18

(54) **Method and apparatus for handling protocol error in a wireless communications system**

(30) Priority: 25.10.2006 US 854083 P
(71) Applicant: Innovative Sonic Limited, Tortola (VG)
(72) Inventor: Jiang, Sam, Shiaw-Shiang, Taipei City (TW); Ou, Meng-Hui, Taipei City (TW)
(74) Representative: Schaeberle, Steffen

(57) **Abstract**

A method for handling protocol errors in a receiver of a wireless communications system includes receiving a ciphered PDU (302), deciphering the PDU (304), and triggering a reset procedure when at least one field of the PDU comprises an invalid value (306).

## Description

This application claims the benefit of U.S. Provisional Application No. 60/854,083, filed on October 25, 2006 and entitled "Method and apparatus for error handling in a wireless communications system", the contents of which are incorporated herein by reference.

The present invention relates to a method and apparatus for handling protocol errors in a wireless communications system according to the pre-characterizing clauses of claims 1, 4, 7 and 10.

The third generation (3G) mobile communications system has adopted a Wideband Code Division Multiple Access (WCDMA) wireless air interface access method for a cellular network. WCDMA can provide high frequency spectrum utilization, universal coverage, and high quality, high speed multimedia data transmission. The WCDMA method also meets all kinds of QoS requirements simultaneously, providing diverse flexible two-way transmission services and better communication quality to reduce transmission interruption rates.

In order to protect user data and signaling information from being intercepted by unauthorized devices, the prior art 3G mobile communications system can trigger ciphering or configure ciphering parameters for a Dedicated Channel between a User Equipment (UE) and the network through a Security Mode Control (SMC) procedure. The SMC procedure calculates keystream data through a Ciphering Algorithm, then the transmitter encrypts plain-text data with the keystream data to generate cipher-text data, and the receiver can decipher the received cipher-text data with keystream data the same as the keystream data used in the transmitter, so as to obtain the plain-text data. The Ciphering Algorithm uses multiple parameters, including a Ciphering Sequence Number (Ciphering SN) composed of a 20-bit RLC HFN (Radio Link Control Hyper Frame Number) and a 12-bit RLC SN.

SN is embedded in a header of a packet, while HFN is maintained in both the transmitter and the receiver. HFN is similar to a carrying number of SN. Each time SN wraps around its maximum representing value back to 0, HFN is incremented by one in the transmitter and in the receiver. For example, if SN is represented by 7 bits, which counts from 0 to 127, once SN is beyond 127, HFN is incremented by 1, and SN restarts from 0. As a result, according to SN, the transmitter and the receiver can timely increment HFN, so as to keep synchronization of HFN and maintain ciphering and deciphering processes.

In some situations, HFN between the transmitter and the receiver may be out of synchronization, causing failure in the ciphering and deciphering processes. In order to recover HFN out of synchronization errors, the RLC entity can execute a reset procedure. Take a communications protocol specification established by the 3GPP for example, when the RLC entity of the transmitter detects any one of three conditions, the reset procedure is executed. In order to clearly describe the three conditions, the following is a description of variables and parameters, and a mode of operation for deleting Service Data Units (SDU).
- Variable VT(DAT):: Indicates a number of times an AM PDU (Acknowledgement Mode Protocol Data Unit) has been scheduled for transmission. Every PDU corresponds to a VT(DAT), and each VT(DAT) shall be incremented every time the corresponding AMD PDU is scheduled to be transmitted.
- Variable VT(MRW):: Indicates a number of times a Move Receiving Window (MRW) command has been transmitted.
- Variable VT(RST):: Indicates a Reset state variable, and is used to count the number of times a RESET PDU is scheduled to be transmitted before the reset procedure is completed.
Parameter MaxDAT: Indicates an upper limit of VT(DAT). The number of times the AM PDU can be scheduled for transmission must be smaller than MaxDAT. When VT(DAT) equals MaxDAT, a higher layer must execute the reset procedure or a SDU discard procedure of the RLC entity.
Parameter MaxMRW: Indicates an upper limit of VT(MRW). The number of times the MRW command can be transmitted must be smaller than or equal to MaxMRW.
- Parameter MaxRST:: Indicates an upper limit of VT(RST). The number of times the RESET PDU can be transmitted must be less than MaxRST. When VT(RST) equals MaxRST, unrecoverable error shall be indicated to upper layers.

Four modes are used to discard SDUs, two of which are related to the parameter MaxDAT:
1. SDU discard after MaxDAT number of transmissions: In this mode, if a number of times a PDU is scheduled for transmission, i.e. VT(DAT), reaches the parameter MaxDAT, the transmitter will discard an SDU corresponding to one or more SDU segments carried by the PDU or an SDU corresponding to a length indicator field used to indicate an end position of one or more SDUs, and explicit signaling is used to notify the receiver.
2. No discard after MaxDAT number of transmissions: In this mode, if the number of times a PDU is scheduled for transmission, i.e. VT(DAT), reaches the parameter MaxDAT, the transmitter will execute the RLC reset procedure.

When a protocol error is detected, the reset procedure is executed, and a principle for determining the protocol error is according to whether the RLC entity of the transmitter detects one of the three following conditions:
Condition 1: "No discard after MaxDAT number of transmissions" mode is configured, and the variable VT(DAT) is equal to the parameter MaxDAT, and then the RLC reset procedure will be executed.
Condition 2: The variable VT(MRW) is equal to the parameter MaxMRW.
Condition 3: A STATUS PDU reported by the receiver to the transmitter or a piggybacked STATUS PDU contains an erroneous sequence number, such as a sequence number reported as missing that has already been acknowledged as received, or a sequence number reported as received that has not yet been transmitted by the transmitter.

After the reset procedure is triggered, the transmitter shall stop transmitting any data PDU or STATUS PDU, ignore any incoming data PDU, piggybacked STATUS PDU or STATUS PDU, and increment VT(RST) by 1. Meanwhile, if VT(RST) = MaxRST, the transmitter shall terminate the ongoing reset procedure, stop a timer Timer_RST if it was started, and indicate unrecoverable error to the upper layer. Oppositely, if VT(RST) < MaxRST, the transmitter shall submit a RESET PDU to the lower layer, and start the timer Timer_RST.

Therefore, when the transmitter detects one of the three conditions mentioned above, the transmitter will trigger a reset procedure, to recover the protocol error. However, the prior art has the following drawbacks:

First, since the transmitter triggers the reset procedure only when one of the three conditions is detected, if a protocol error occurs but does not conform to any of the three conditions, the prior art cannot recover the protocol error. For example, in the case that "SDU discard after MaxDAT number of transmissions" is configured, which is not corresponding to any of the three conditions, when VT(DAT) reaches the value MaxDAT due to HFN being out of synchronization, the SDU discard procedure is triggered. During the SDU discard procedure, a STATUS PDU carrying the MRW command is sent. Since a STATUS PDU is not ciphered, the receiver can successfully receive it whether HFNs are synchronized or not. After the successful SDU discard procedure, the next PDU can be scheduled to transmission. However, the HFN remains unsynchronized because the reset procedure is not executed, and the next PDU can still not be received correctly. In other words, when "SDU discard after MaxDAT number of transmissions" is configured, the SDU discard procedure is completed without triggering the reset procedure, so that the HFN out of synchronization errors cannot be recovered.

Second, when a deciphered piggybacked STATUS PDU contains invalid value, the prior art just discard the piggybacked STATUS PDU. Since this is a good indication of HFN out of synchronization error, the prior art does not handle this error properly.

In short, the prior art cannot effectively recover HFN out of synchronization error, thus affects transmission efficiency, and wastes system resources.

This in mind, the present invention aims at providing a method and apparatus for handling protocol errors in a wireless communications system, so as to timely trigger a reset procedure to recover the protocol errors.

This is achieved by a method and apparatus for handling protocol errors in a wireless communications system according to claims 1, 4, 7 and 10. The dependent claims pertain to corresponding further developments and improvements.

As will be seen more clearly from the detailed description following below, the claimed method for handling protocol errors in a receiver of a wireless communications system comprises receiving a ciphered PDU, deciphering the PDU, and triggering a reset procedure when at least one field of the PDU comprises an invalid value.

In the following, the invention is further illustrated by way of example, taking reference to the accompanying drawings. Thereof
Fig. 1 is a function block diagram of a wireless communications device.
Fig. 2 is a diagram of program code of Fig. 1.
Fig. 3 is a flowchart of a process according to an embodiment of the present invention.
Fig. 4 is a flowchart of a process according to another embodiment of the present invention.

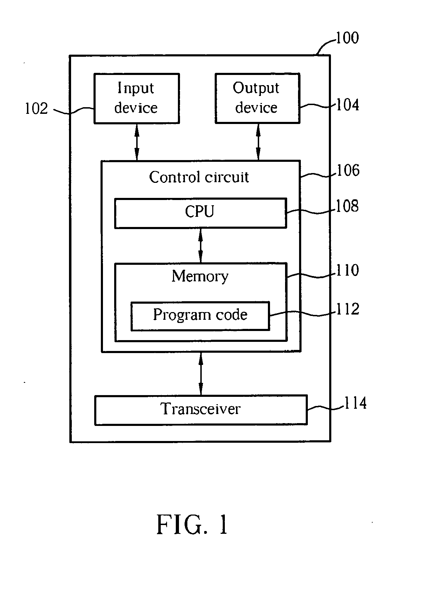

Please refer to Fig. 1, which is a functional block diagram of a communications device 100. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

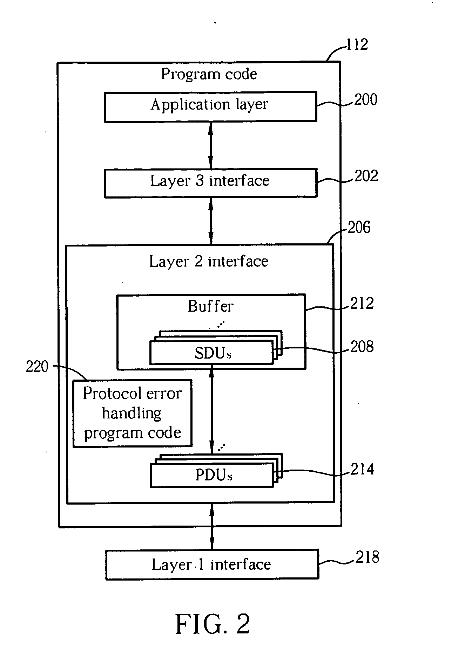

Please continue to refer to Fig. 2. Fig. 2 is a diagram of the program code 112 shown in Fig. 1. The program code 112 comprises an application layer 200, a Layer 3 interface 202, and a Layer 2 interface 206, and is coupled to a Layer 1 interface 218. When a signal is transmitted, the Layer 2 interface 206 forms a plurality of SDUs 208 according to data submitted by the Layer 3 interface 202, and stores the plurality of SDUs 208 in a buffer 212. Then, based on the SDUs 208 stored in the buffer 212, the Layer 2 interface 206 generates a plurality of PDUs 214, and sends the plurality of PDUs 214 to a destination terminal through the Layer 1 interface 218. In contrast, when a wireless signal is received, the signal is received through the Layer 1 interface 218, then delivered as PDUs 214 to the Layer 2 interface 206. The Layer 2 interface 206 restores the PDUs 214 to SDUs 208 and stores the SDUs 208 in the buffer 212. Last, the Layer 2 interface 206 delivers the SDUs 208 stored in the buffer 212 to the Layer 3 interface 202.

As mentioned above, HFN between the transmitter and the receiver may be out of synchronization, causing failure in the ciphering and deciphering processes, and thus the Layer 2 interface 206 should execute a reset procedure. In such a situation, the embodiment of the present invention provides a protocol error handling program code 220, for timely triggering the reset procedure, and recovering the HFN out of synchronization error. Note that, definitions of "transmitter" and "receiver" hereinafter are well known for those skilled in the art. That is, for the uplink transmission, UE is the transmitter and the network is the receiver, while for the downlink transmission, UE is the receiver and the network is the transmitter.

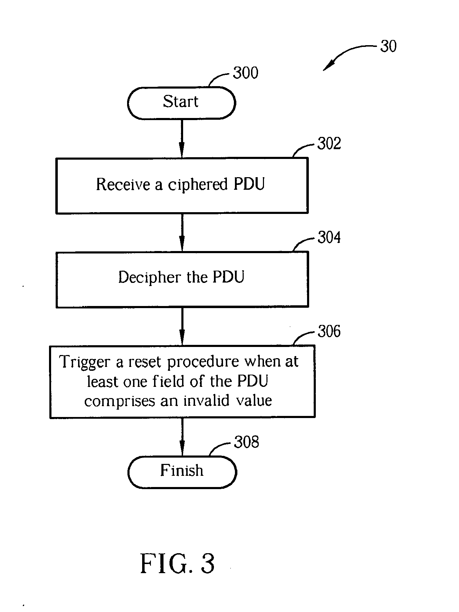

Please refer to Fig. 3, which illustrates a diagram of a process 30 according to an embodiment of the present invention. The process 30 is utilized for handling protocol errors in a receiver of a wireless communications system, and can be compiled into the protocol error handling program code 220. The process 30 comprises the following steps:
Step 300: Start.
Step 302: Receive a ciphered PDU.
Step 304: Decipher the PDU.
Step 306: Trigger a reset procedure when at least one field of the PDU comprises an invalid value.
Step 308: Finish.

According to the process 30, when the receiver receives and deciphers a ciphered PDU, if at least one field of the PDU contains an invalid value, the embodiment of the present invention will trigger the reset procedure. That is, when the receiver detects that a field of a received PDU has the invalid value, the receiver will triggers the reset procedure. In short, the receiver can detect contents of the received PDU, and determine whether the reset procedure is necessary to be executed accordingly.

In the prior art, when the transmitter detects one of the above-mentioned three conditions, the transmitter can trigger the reset procedure, to recover protocol errors. That is, when a protocol error occurs but does not conform to any of the three conditions, the prior art cannot recover the protocol error. In comparison, in the embodiment of the present invention, when the receiver detects that a field of a received PDU has the invalid value, the receiver will triggers the reset procedure. In other words, in the embodiment of the present invention, the receiver can triggers the reset procedure.

For example, in the case that "SDU discard after MaxDAT number of transmissions" is configured, which is not corresponding to any of the three conditions, when the receiver cannot accurately decipher a PDU due to HFN being out of synchronization, the receiver will trigger the reset procedure according to the process 30, so as to recover the HFN out of synchronization error.

Note that, the embodiment of the present invention triggers the reset procedure when the receiver detects that at least one field of a PDU has an invalid value. Preferably, the PDU can be but not limited to a ciphered RLC PDU, such as an AMD PDU, and the at lease one field is not limited to a specified field, which can be a length indicator field. In other words, when the receiver receives an AMD PDU, if a length indicator field of the AMD PDU has an invalid value, the receiver will trigger the reset procedure.

Therefore, via the process 30, the receiver can timely trigger the reset procedure when a protocol error, such as HFN out of synchronization error, is detected, in order to recover the protocol error.

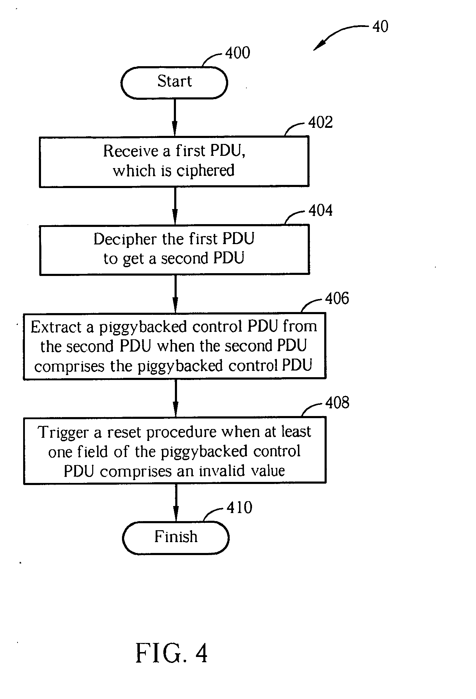

Please refer to Fig. 4, which illustrates a diagram of a process 40 according to an embodiment of the present invention. The process 40 is utilized for handling protocol errors in a transmitter of a wireless communications system, and can be compiled into the protocol error handling program code 220. The process 40 comprises the following steps:
Step 400: Start.
Step 402: Receive a first PDU, which is ciphered.
Step 404: Decipher the first PDU to get a second PDU.
Step 406: Extract a piggybacked control PDU from the second PDU when the second PDU comprises the piggybacked control PDU.
Step 408: Trigger a reset procedure when at least one field of the piggybacked control PDU comprises an invalid value.
Step 410: Finish.

According to the process 40, when the transmitter receives a piggybacked control PDU reported by the receiver and the PDU containing the piggybacked control PDU has been ciphered, if at least one field of the piggybacked control PDU has an invalid value, the embodiment of the present invention will trigger the reset procedure. That is, when the transmitter detects that a field of the piggybacked control PDU has the invalid value, the transmitter triggers the reset procedure.

In the prior art, when the transmitter detects one of the above-mentioned three conditions, the transmitter can trigger the reset procedure. When the piggybacked control PDU has the invalid value, the prior art just discards the piggybacked control PDU, and does not use the information carried by the piggybacked control PDU. In comparison, in the embodiment of the present invention, when the transmitter detects that a field of the piggybacked control PDU has the invalid value, the transmitter triggers the reset procedure. In other words, in the embodiment of the present invention, the transmitter is not limited by the three conditions and can timely trigger the reset procedure according to the information carried by the piggybacked control PDU.

Note that, when the transmitter detects at least one field of a piggybacked control PDU has the invalid value, the embodiment of the present invention triggers the reset procedure. For example, if a PDU type field of the piggybacked control PDU indicates that the piggybacked control PDU is not allowed to be piggybacked by a PDU, or the piggybacked control PDU is a RESET PDU or RESET ACK PDU, the embodiment of the present invention can trigger the reset procedure.

Therefore, via the process 40, the transmitter can timely trigger the reset procedure when at least one field of the piggybacked control PDU reported by the receiver has an invalid value, in order to timely recover the protocol error.

In summary, the embodiment of the present invention can accurately handle protocol errors, and the receiver can timely trigger the reset procedure to recover the protocol errors.

## Claims

1. A method for handling protocol errors in a receiver of a wireless communications system comprising:
receiving a ciphered protocol data unit, called PDU hereinafter (302); and
deciphering the PDU (304);
**characterized by** triggering a reset procedure when at least one field of the PDU comprises an invalid value (306).

2. The method of claim 1, **characterized in that** the PDU is a radio link control PDU.

3. The method of claim 1, **characterized in that** the PDU is an acknowledgement-mode data PDU, and the at least one field comprises a length indicator field.

4. A communications device (100) of a wireless communications system utilized for accurately handling protocol errors comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
code for receiving a ciphered protocol data unit, called PDU hereinafter (302); and
code for deciphering the PDU (304);
**characterized by** code for triggering a reset procedure when at least one field of the PDU comprises an invalid value (306).

5. The communications device of claim 4, **characterized in that** the PDU is a radio link control PDU.

6. The communications device of claim 4, **characterized in that** the PDU is an acknowledgement-mode data PDU, and the at least one field comprises a length indicator field.

7. A method for handling protocol errors in a transmitter of a wireless communications system comprising:
receiving a first protocol data unit, called PDU hereinafter, which is ciphered (402);
deciphering the first PDU to get a second PDU (404); and
extracting a piggybacked control PDU from the second PDU when the second PDU comprises the piggybacked control PDU (406);
**characterized by** triggering a reset procedure when at least one field of the piggybacked control PDU comprises an invalid value (408).

8. The method of claim 7, **characterized in that** triggering the reset procedure when the at least one field of the piggybacked control PDU (408) comprises the invalid value is triggering the reset procedure when a type field of the piggybacked control PDU indicates that the piggybacked control PDU is not allowed to be piggybacked in the second PDU.

9. The method of claim 8, **characterized in that** the type field indicates that the piggybacked control PDU is a reset PDU or a reset acknowledgement PDU.

10. A communications device (100) of a wireless communications system utilized for accurately handling protocol errors comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
code for receiving a first protocol data unit, called PDU hereinafter, which is ciphered (402);
code for deciphering the first PDU to get a second PDU (404); and
code for extracting a piggybacked control PDU from the second PDU when the second PDU comprises the piggybacked control PDU (406);
**characterized by** code for triggering a reset procedure when at least one field of the piggybacked control PDU comprises an invalid value (408).

11. The communications device of claim 10, **characterized in that** code for triggering the reset procedure when the at least one field of the piggybacked control PDU comprises the invalid value (408) is triggering the reset procedure when a type field of the piggybacked control PDU indicates that the piggybacked control PDU is not allowed to be piggybacked in the second PDU.

12. The communications device of claim 11, **characterized in that** the type field indicates that the piggybacked control PDU is a reset PDU or a reset acknowledgement PDU.
